# FASCICULE DE BREVET EUROPEEN

(11) **EP 3 405 382 B1**
(45) Date de publication et mention de la délivrance du brevet: **26.02.2020**
(21) Numéro de dépôt: 17701551.8
(22) Date de dépôt: 05.01.2017
(51) Int. Cl.: B62D 25/08

(54) **PIÈCE DE RENFORT D'UNE TRAVERSE INFÉRIEURE DE BAIE**
TEIL ZUR VERSTÄRKUNG EINES UNTEREN QUERTRÄGERS FÜR EINE FENSTERÖFFNUNG
PART FOR REINFORCING A LOWER CROSSBEAM FOR A WINDOW OPENING

(30) Priorité: 19.01.2016 FR 1650402
(43) Date de publication de la demande: 28.11.2018
(73) Titulaire: PSA Automobiles SA, 78300 Poissy (FR)
(72) Inventeur: RAUCAZ, Vincent, 25700 Valentigney (FR)
(74) Mandataire: Fernandez, Francis Lionel
(86) Numéro de dépôt international: PCT/FR2017/050025
(87) Numéro de publication internationale: WO 2017/125659

(56) Documents cités:
- DE-U1-202014 102 661
- JP-A- 2013 082 245
- US-A1- 2007 102 222
- US-A1- 2012 032 468
- US-A1- 2013 134 736

## Description

L'invention a trait au domaine de l'automobile. Plus précisément, l'invention a trait aux éléments de renfort des traverses inférieures de baie des véhicules automobiles.

La traverse inférieure de baie est un élément de structure rapporté et fixé sur un tablier de véhicule automobile. Le tablier est une cloison transversale à la direction longitudinale du véhicule, située à l'avant de l'habitacle et séparant ce dernier du compartiment moteur. La traverse inférieure de baie est également fixée, à chacune de ses extrémités latérales, sur la carrosserie du véhicule automobile. L'une des fonctions de la traverse inférieure de baie est de supporter le bord inférieur du pare-brise.

Le moteur du véhicule constitue la source principale de bruits et de vibrations. Dans une moindre mesure, la carrosserie s'avère également être une telle source, car celle-ci génère des bruits et vibrations, suivant le type de route sur lequel évolue le véhicule. La traverse inférieure de baie soumise à des vibrations, les transmet au pare-brise, lequel génère du bruit dans l'habitacle.

US 2007/010222 décrit une structure de véhicule dans laquelle une pièce de renfort est prévu entre une pièce portant le pare-brise et le tablier.

Afin d'atténuer les vibrations, il est proposé dans le document FR 2 917 044 une traverse inférieure de baie présentant en section un profil en U. La traverse inférieure de baie est prolongée à son extrémité inférieure par le tablier. Un élément interne de renfort, présentant également en section un profil en U, loge dans la traverse inférieure de baie et est fixé à cette dernière, par soudure. L'élément de renfort présente une forme générale de boîte ouverte dont les parois latérale, supérieure et inférieure sont respectivement fixées à des parois latérale, supérieure et inférieure de la traverse. La traverse inférieure de baie et son élément interne forment ensemble un caisson fermé. L'inertie de ce caisson permet de diminuer les vibrations.

Ce type d'assemblage présente de nombreux inconvénients. Tout d'abord, cet assemblage n'est possible que lorsque la traverse inférieure de baie présente un profil en forme de U. Cet assemblage ne peut donc pas s'adapter à toute forme de traverse inférieure de baie. Or, il est de plus en plus fréquent de trouver des traverses ouvertes et non plus en forme de U.

De plus, l'utilisation d'un élément de renfort en forme de U logeant dans une traverse également en forme de U, requiert une certaine précision des cotes. En effet, pour fixer l'élément de renfort sur la traverse et former le caisson, les parois de celui-ci doivent être au plus près des parois de la traverse. Ce type de précision est souvent difficile à gérer sur une ligne de ferrage (processus d'assemblage par soudure), et il n'est pas rare que les éléments de renforts soient trop larges pour rentrer dans la traverse, ou au contraire trop courts pour être convenablement fixés. Cette précision géométrique grève la production, car de nombreuses pièces sont mises au rebut. Un autre inconvénient est que les outils de soudure peuvent difficilement atteindre les zones de soudure, pour fixer l'élément de renfort sur la pièce de renfort.

Un premier objectif est de proposer une pièce de renfort qui permette d'atténuer les vibrations, quelle que soit la forme de la traverse inférieure de baie.

Un deuxième objectif est de renforcer efficacement la traverse inférieure de baie.

Un troisième objectif est de faciliter le montage de la pièce de renfort, en limitant la nécessité de précision géométrique de la pièce de renfort.

A cet effet, il est proposé, en premier lieu, une pièce de renfort d'une traverse inférieure de baie fixée sur un tablier de véhicule automobile, la pièce de renfort présentant en section un profil en forme de U, cette pièce de renfort étant munie d'une paroi de fond et de deux parois latérales définissant ensemble une cavité, dans laquelle les parois latérales sont toutes deux fixées à une face inférieure de la traverse inférieure de baie, la cavité étant en regard de la face inférieure, la pièce de renfort étant en outre fixée au tablier, la pièce de renfort comprenant un élément complémentaire de renfort, destiné à renforcer un bord d'extrémité de la traverse.

Cette pièce de renfort permet d'atténuer les vibrations quelle que soit la forme de la traverse inférieure de baie. La pièce de renfort permet également de renforcer efficacement la traverse inférieure de baie. Le montage de la pièce de renfort est également facilité en limitant le besoin de précision géométrique, du fait notamment de la fixation de la pièce de renfort directement sur le tablier.

Diverses caractéristiques supplémentaires peuvent être prévues, seules ou en combinaison :
- chaque paroi latérale comprend, à une extrémité supérieure, des pattes de fixation destinées à fixer la pièce de renfort sur la face inférieure de la traverse inférieure de baie ;
- les pattes de fixation s'étendent dans une direction opposée à la cavité ;
- chaque paroi latérale est munie de pattes verticales, destinées à fixer la pièce de renfort sur le tablier ;
- l'élément complémentaire de renfort comprend une paroi principale et deux patins, les deux patins étant aptes à être fixés sur la traverse inférieure de baie ;
- la pièce de renfort comprend une pluralité de languettes, aptes à fixer l'élément complémentaire de renfort sur la pièce de renfort, les languettes s'étendant sensiblement parallèlement à la paroi principale ;
- les patins comprennent une platine, munie d'un orifice de fixation, apte à recevoir des moyens de fixation de la platine à la traverse inférieure de baie.

Il est proposé, en deuxième lieu, une traverse inférieure de baie comprenant une pièce de renfort telle que présentée ci-dessus.

Il est proposé, en troisième lieu, un véhicule automobile comprenant une telle traverse inférieure de baie.

D'autres caractéristiques et avantages de l'invention apparaîtront plus clairement et de manière concrète à la lecture de la description ci-après des modes de réalisation, laquelle est faite en référence aux dessins annexés dans lesquels :
- la figure 1 est une vue en perspective d'un véhicule automobile comprenant une traverse inférieure de baie, un collecteur d'auvent et une pièce de renfort de la traverse,
- la figure 2 est une vue en perspective de la traverse inférieure, du collecteur d'auvent et de la pièce de renfort de la figure 1,
- la figure 3 est une vue en deux dimensions de la pièce de renfort,

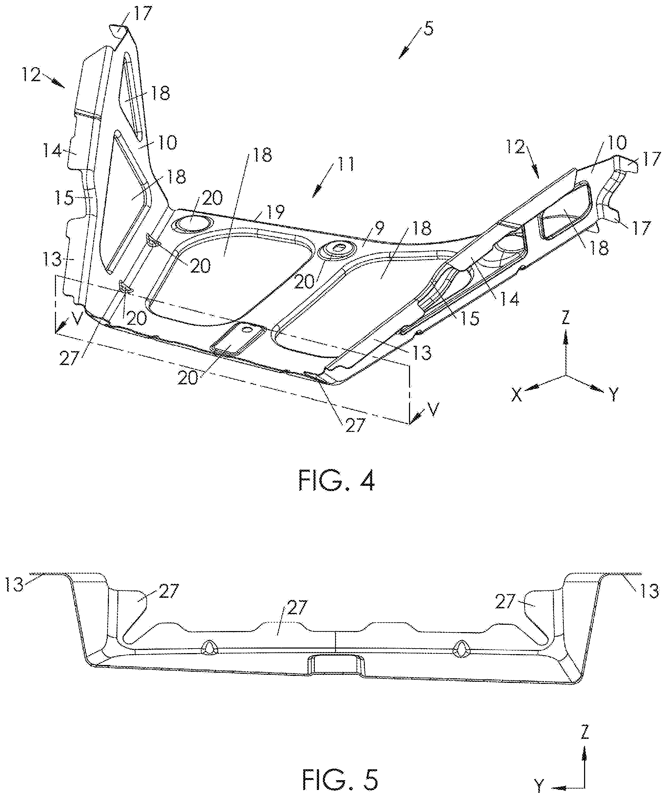

- la figure 4 est une vue en perspective de la pièce de renfort de la figure 3,
- la figure 5 est une vue en section selon le plan de coupe V-V de la figure 4,
- la figure 6 est une vue similaire à celle de la figure 2, la pièce de renfort comprenant en plus un élément complémentaire de renfort,
- la figure 7 est une vue en perspective de l'élément complémentaire de renfort de la figure 6.

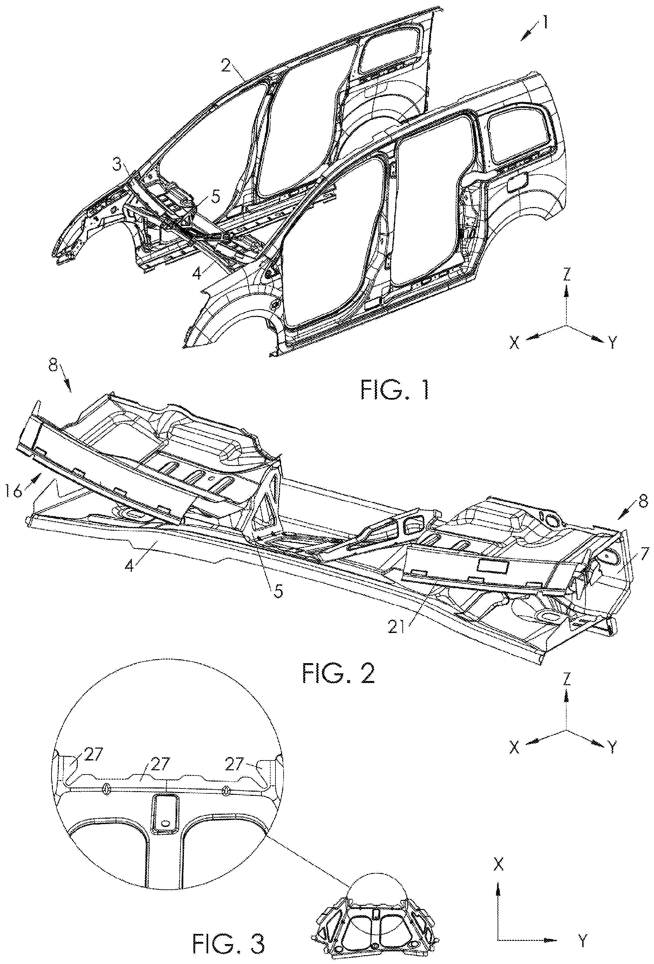

Sur la figure 1 est représenté un véhicule **1** automobile comprenant une caisse **2** pourvue d'une traverse **3** inférieure de baie de pare-brise et d'un collecteur **4** d'auvent. La traverse **3** est munie d'une pièce **5** de renfort.

On définit par rapport au véhicule **1** un repère orthogonal XYZ comprenant trois axes perpendiculaires deux à deux, à savoir :
- un axe X, définissant une direction longitudinale, horizontale, confondue avec la direction générale de déplacement du véhicule **1**,
- un axe Y, définissant une direction transversale, horizontale, qui avec l'axe X définit un plan XY horizontal,
- un axe Z, définissant une direction verticale, perpendiculaire au plan XY horizontal.

La traverse **3**, la pièce **5** de renfort et le collecteur **4** d'auvent sont illustrés en détail sur la figure 2. Afin de représenter de façon claire la pièce **5** de renfort, une partie de la traverse **3** est volontairement occultée, afin de rendre visible la pièce **5** de renfort lorsque celle-ci est montée sur la traverse **3.** Cette partie occultée se situe, selon l'axe Y, sensiblement au centre de la traverse.

Le véhicule **1** comprend un tablier **7.** Ainsi que précédemment expliqué, le tablier **7** est une cloison transversale à l'axe X du véhicule, située à l'avant de l'habitacle et séparant ce dernier du compartiment moteur.

Dans le mode de réalisation représenté sur les figures, la traverse **3** se présente sous la forme d'une pièce monobloc, s'étendant selon l'axe transversal Y. La traverse **3** est fixée sur le tablier **7.** La traverse **3** est également fixée de chaque côté **8** latéral sur la caisse **2.**

Le collecteur **4** d'auvent s'étend, de manière similaire à la traverse **3**, en dessous de cette dernière selon l'axe Z. A l'instar de la traverse **3**, le collecteur **4** d'auvent est fixé à la fois sur le tablier **7** et sur la caisse **2.**

La pièce **5** de renfort comprend une paroi **9** de fond et deux parois **10** latérales définissant ensemble une cavité **11.** Le terme "paroi" désigne un élément dont l'épaisseur est non nulle.

Les parois **10** latérales font avec la paroi **9** de fond, un angle sensiblement supérieur à 90°.

Chaque paroi **10** latérale comprend à une extrémité **12** supérieure, une patte **13** de fixation proximale et une patte **14** de fixation distale. Les pattes **13**,**14** de fixation s'étendent, de préférence, vers l'extérieur de la pièce **5** de renfort, soit dans une direction opposée à la cavité **11.** Ceci permet, avantageusement, de faciliter la fixation de la pièce **5** de renfort, en laissant libre d'accès lesdites pattes **13**,**14** de fixation à divers outils de fixation (non représentés).

La paroi **10** latérale définit un décroché **15** provoquant une différence de hauteur selon l'axe Z, entre la patte **13** de fixation proximale et la patte **14** de fixation distale. Ce décroché **15** permet avantageusement de suivre la forme de la traverse **3.**

Les pattes **13**,**14** de fixation s'étendent sur une largeur suffisamment importante pour permettre à la pièce **5** de renfort de prendre solidement appui sur la traverse **3.** Les pattes **13**,**14** de fixation peuvent être fixées à la traverse **3** par divers moyens. Elles sont fixées sur une face **16** inférieure de la traverse **3.** La face **16** inférieure de la traverse **3** est celle située en regard du collecteur **4** d'auvent. De préférence, la fixation se fait par soudage.

Chaque paroi **10** latérale est munie de pattes **17** verticales s'étendant sensiblement dans le plan YZ. Les pattes **17** verticales sont destinées à fixer la pièce **5** de renfort sur le tablier **7.** Elles s'étendent avantageusement dans une direction opposée à la cavité **11**, afin de faciliter l'accès à un outil de fixation. Dans un exemple de réalisation représenté sur les figures, chaque paroi **10** latérale comprend deux pattes **17** verticales.

Lorsque la pièce **5** de renfort est fixée sur la traverse **3**, la cavité **11** est en regard de la face **16** inférieure.

La pièce **5** de renfort comprend divers trous **18** visant à alléger la pièce **5** de renfort. Ces trous **18** sont situés à distance des bords **19** de la pièce **5** de renfort, afin de ne pas fragiliser cette dernière. La pièce **5** de renfort est avantageusement produite dans un matériau métallique. La pièce **5** de renfort comprend également une pluralité de reliefs **20** visant à la renforcer localement.

La section de la cavité **11** selon le plan YZ diminue depuis les pattes **17** verticales, en direction de l'axe X.

La traverse **3** est soumise à des vibrations, l'amenant à se déformer dans plusieurs directions de l'espace, et plus particulièrement en flexion autour de l'axe X.

La pièce **5** de renfort permet avantageusement de bloquer la torsion de la traverse **3** autour de l'axe X. Le renforcement opéré par la pièce **5** de renfort est d'autant plus important que la largeur et la longueur de la cavité **11** respectivement selon les axes X et Y sont grandes. Toutefois, la largeur de la cavité **11** ne peut excéder une valeur prédéterminée, au-delà de laquelle le renforcement ne se fait plus convenablement.

Le pare-brise est fortement émissif d'un point de vue acoustique. La pièce **5** de renfort limite considérablement les vibrations émises vers le pare-brise, notamment grâce à sa longueur qui s'étend avantageusement jusqu'à un bord **21** d'extrémité de la traverse **3**, au voisinage du pare-brise, et par la raideur qu'il apporte localement.

Un autre avantage est que la dissipation se fait directement via le tablier **7**, la pièce **5** de renfort étant directement fixée au tablier **7**, et non plus à une quelconque autre pièce du véhicule **1** automobile. En plus d'améliorer l'efficacité du renfort et la dissipation des vibrations acoustiques, l'assemblage s'en trouve ainsi fortement simplifié, la précision géométrique nécessaire étant moindre. En effet, la pièce **5** de renfort ne loge pas dans une zone où les précisions géométriques sont importantes.

Un autre avantage est que la pièce **5** de renfort peut être utilisée sur des traverses **3** de formes diverses. La pièce **5** de renfort est particulièrement avantageuse sur des traverses **3** dont le profil est ouvert. L'expression "ouvert" désigne ici une traverse **3** grossièrement plane.

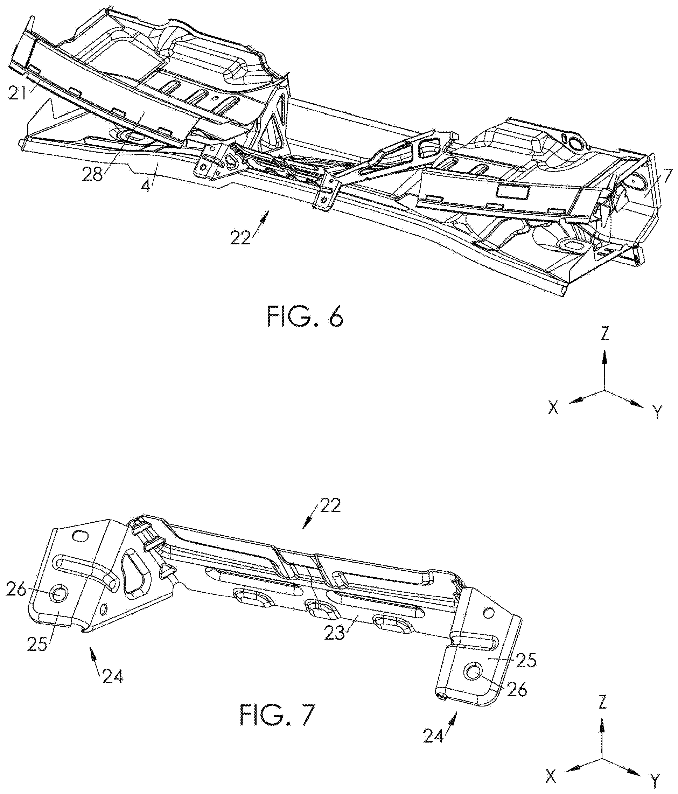

Dans un second mode de réalisation représenté sur les figures 6 et 7, la pièce **5** de renfort est prolongée par un élément **22** complémentaire de renfort. L'élément **22** complémentaire rallonge la longueur de la pièce **5** de renfort, selon l'axe X. L'élément **22** complémentaire de renfort est rapporté et fixé sur la pièce **5** de renfort. Ceci permet avantageusement pour le constructeur automobile d'adapter notamment la pièce **5** de renfort à différentes tailles de traverse **3.**

L'élément **22** complémentaire comprend une paroi **23** principale. De chaque côté de la paroi **23** principale, l'élément **22** complémentaire comprend un patin **24** en forme de L. Le patin **24** comprend une platine **25.** La platine **25** comprend un orifice **26** de fixation, apte à recevoir des moyens de fixation (non représentés). La platine **25** est fixée, via l'orifice **26** de fixation et les moyens de fixation, à la face **16** inférieure de la traverse **3.** Les moyens de fixation sont, par exemple, un boulon (ensemble vis-écrou).

Ainsi qu'illustré sur la figure 3, la pièce **5** de renfort comprend plusieurs languettes **27** sensiblement parallèles à la paroi **23** principale. La paroi **23** principale est fixée sur les languettes **27.**

L'élément **22** complémentaire renforce la traverse **3** au niveau d'une zone **28** d'accueil du pare-brise, et réduit de surcroît les vibrations émises vers celui-ci. Les vibrations émises vers le pare-brise sont inhibées au plus près de la source, empêchant le pare-brise d'émettre des vibrations acoustiques dans l'habitacle.

## Revendications

1. Pièce (**5**) de renfort d'une traverse (**3**) inférieure de baie fixée sur un tablier (**7**) de véhicule (**1**) automobile, la pièce (**5**) de renfort présentant en section un profil en forme de U, cette pièce (**5**) de renfort étant munie d'une paroi (**9**) de fond et de deux parois (**10**) latérales définissant ensemble une cavité (**11**), les parois (**10**) latérales étant toutes deux fixées à une face (**16**) inférieure de la traverse (**3**) inférieure de baie, la cavité (**11**) étant en regard de la face (**16**) inférieure, la pièce (**5**) de renfort étant en outre fixée au tablier (**7**), **caractérisée en ce que** la pièce (5) de renfort comprend un élément (22) complémentaire de renfort, destiné à renforcer un bord (21) d'extrémité de la traverse (3).

2. Pièce (**5**) de renfort selon la revendication 1, **caractérisée en ce que** chaque paroi (**10**) latérale comprend à une extrémité (**12**) supérieure des pattes (**13**,**14**) de fixation, destinées à fixer la pièce (**5**) de renfort sur la face (**16**) inférieure de la traverse (**3**) inférieure de baie.

3. Pièce (**5**) de renfort selon la revendication 2, **caractérisée en ce que** les pattes (**13**,**14**) de fixation s'étendent dans une direction opposée à la cavité (**11**).

4. Pièce (**5**) de renfort selon l'une quelconque des revendications précédentes, **caractérisée en ce que** chaque paroi (**10**) latérale est munie de pattes (**17**) verticales, destinées à fixer la pièce (**5**) de renfort sur le tablier (**7**).

5. Pièce (**5**) de renfort selon l'une des revendications 1 à 4, **caractérisée en ce que** l'élément (**22**) complémentaire de renfort comprend une paroi (**23**) principale et deux patins (**24**), les deux patins (**24**) étant aptes à être fixés sur la traverse (**3**) inférieure de baie.

6. Pièce (**5**) de renfort selon la revendication 5, **caractérisée en ce que** la pièce (**5**) de renfort comprend une pluralité de languettes (**27**) aptes à fixer l'élément (**22**) complémentaire de renfort sur la pièce (**5**) de renfort, les languettes (**27**) s'étendant sensiblement parallèlement à la paroi (**23**) principale.

7. Pièce (**5**) de renfort selon l'une quelconque des revendications 5 ou 6, **caractérisée en ce que** les patins (**24**) comprennent une platine (**25**) munie d'un orifice (**26**) de fixation apte à recevoir des moyens de fixation de la platine (**25**) à la traverse (**3**) inférieure de baie.

8. Traverse (**3**) inférieure de baie comprenant une pièce (**5**) de renfort selon l'une quelconque des revendications précédentes.

9. Véhicule (**1**) automobile comprenant une traverse (**3**) inférieure de baie selon la revendication 8.

## Patentansprüche

1. Verstärkungsteil (5) eines unteren Fensteröffnungsquerträgers (3), das auf einem Umlaufblech (7) eines Kraftfahrzeugs (1) befestigt ist, wobei das Verstärkungsteil (5) im Querschnitt ein U-förmiges Profil aufweist, wobei dieses Verstärkungsteil (5) mit einer Bodenwand (9) und zwei Seitenwänden (10) versehen ist, die gemeinsam einen Hohlraum (11) bilden, wobei die Seitenwände (10) beide an einer unteren Fläche (16) des unteren Fensteröffnungsträgers (3) befestigt sind, wobei der Hohlraum (11) der unteren Fläche (16) gegenüberliegt, wobei das Verstärkungsteil (5) außerdem an dem Umlaufblech (7) befestigt ist, **dadurch gekennzeichnet, dass** das Verstärkungsteil (5) ein komplementäres Verstärkungselement (22), das dazu bestimmt ist, einen Endrand (21) des Querträgers (3) zu verstärken, umfasst.

2. Verstärkungsteil (5) nach Anspruch 1, **dadurch gekennzeichnet, dass** jede Seitenwand (10) an einem oberen Ende (12) Befestigungspratzen (13, 14) umfasst, die dazu bestimmt sind, das Verstärkungsteil (5) auf der unteren Fläche (16) des Fensteröffnungsträgers (3) zu befestigen.

3. Verstärkungsteil (5) nach Anspruch 2, **dadurch gekennzeichnet, dass** sich die Befestigungspratzen (13, 14) in eine Richtung, die dem Hohlraum (11) entgegengesetzt ist, erstrecken.

4. Verstärkungsteil (5) nach einem der vorstehenden Ansprüche, **dadurch gekennzeichnet, dass** jede Seitenwand (10) mit vertikalen Pratzen (17) versehen ist, die dazu bestimmt sind, das Verstärkungsteil (5) auf dem Umlaufblech (7) zu befestigen.

5. Verstärkungsteil (5) nach einem der Ansprüche 1 bis 4, **dadurch gekennzeichnet, dass** das komplementäre Verstärkungselement (22) eine Hauptwand (23) und zwei Kufen (24) umfasst, wobei die zwei Kufen (24) angepasst sind, um auf dem unteren Fensteröffnungsquerträger (3) befestigt zu sein.

6. Verstärkungsteil (5) nach Anspruch 5, **dadurch gekennzeichnet, dass** das Verstärkungsteil (5) eine Vielzahl von Laschen (27) umfasst, die angepasst sind, um das komplementäre Verstärkungselement (22) auf dem Verstärkungsteil (5) zu befestigen, wobei sich die Laschen (27) im Wesentlichen parallel zu der Hauptwand (23) erstrecken.

7. Verstärkungsteil (5) nach einem der Ansprüche 5 oder 6, **dadurch gekennzeichnet, dass** die Kufen (24) eine Platte (25) umfassen, die mit einer Befestigungsöffnung (26) versehen ist, die geeignet ist, Mittel zum Befestigen der Platte (25) auf dem unteren Fensteröffnungsquerträger (3) aufzunehmen.

8. Unterer Fensteröffnungsquerträger (3), der ein Verstärkungsteil (5) nach einem der vorstehenden Ansprüche umfasst.

9. Kraftfahrzeug (1), das einen unteren Fensteröffnungsquerträger (3) nach Anspruch 8 umfasst.

## Claims

1. A part (5) for reinforcing a lower crossbeam (3) for a window opening attached to a firewall (7) of a motor vehicle (1), the reinforcing part (5) having, in cross-section, a U-shaped profile, this reinforcing part (5) being provided with a bottom wall (9) and two side walls (10) together defining a cavity (11), the side walls (10) being both attached to a lower face (16) of the lower crossbeam (3) of the window opening, the cavity (11) being opposite the lower face (16), the reinforcing part (5) being further attached to the firewall (7), **characterized in that** the reinforcing part (5) includes a complementary reinforcing element (22), intended to reinforce an end edge (21) of the crossbeam (3).

2. The reinforcing part (5) according to Claim 1, **characterized in that** each side wall (10) includes at an upper end (12) attachment tabs (13, 14), intended to attach the reinforcing part (5) on the lower face (16) of the lower crossbeam (3) of the window opening.

3. The reinforcing part (5) according to Claim 2, **characterized in that** the attachment tabs (13, 14) extend in an opposite direction to the cavity (11).

4. The reinforcing part (5) according to any one of the preceding claims, **characterized in that** each side wall (10) is provided with vertical tabs (17), intended to attach the reinforcing part (5) on the firewall (7).

5. The reinforcing part (5) according to one of Claims 1 to 4, **characterized in that** the complementary reinforcing element (22) includes a main wall (23) and two pads (24), the two pads (24) being able to be attached on the lower crossbeam (3) of the window opening.

6. The reinforcing part (5) according to Claim 5, **characterized in that** the reinforcing part (5) includes a plurality of tongues (27) able to attach the complementary reinforcing element (22) on the reinforcing part (5), the tongues (27) extending substantially parallel to the main wall (23).

7. The reinforcing part (5) according to any one of Claims 5 or 6, **characterized in that** the pads (24) include a plate (25) provided with an attachment opening (26) able to receive attachment means of the plate (25) to the lower crossbeam (3) of the window opening.

8. A lower crossbeam (3) of a window opening including a reinforcing part (5) according to any one of the preceding claims.

9. A motor vehicle (1) including a lower crossbeam (3) of a window opening according to Claim 8.
